Europäisches Patentamt

European Patent Office

Office européen des brevets

(19)

(11) Publication number: **0 188 896**
**B1**

(12) **EUROPEAN PATENT SPECIFICATION**

(45) Date of publication of patent specification: **28.09.88**

(51) Int. Cl.⁴: **A 23 F 3/16, A 23 F 3/22**

(21) Application number: **85309219.5**

(22) Date of filing: **18.12.85**

(54) Soluble or dissolved tea product.

(30) Priority: **21.12.84 GB 8432509**

(43) Date of publication of application:
**30.07.86 Bulletin 86/31**

(45) Publication of the grant of the patent:
**28.09.88 Bulletin 88/39**

(84) Designated Contracting States:
**AT BE CH DE FR GB IT LI LU NL SE**

(56) References cited:
**FR-A-2 122 414**

(73) Proprietor: **Mars G.B. Limited**
**143-149 Fenchurch Street**
**London EC3M 6BN (GB)**

(72) Inventor: **Adams, William John**
**74 Morley Road, Harrow Way**
**Basingstoke, Hants. (GB)**

(74) Representative: **Colgan, Stephen James et al**
**CARPMAELS & RANSFORD 43 Bloomsbury**
**Square**
**London WC1A 2RA. (GB)**

## Description

This invention relates to the production of a tea product (which may be either liquid or solid) derived from tea liquor (that is, a liquid obtained by infusing leaf tea in water). The liquid or solid product, when diluted to a normal tea strength, provides a tea beverage.

In our earlier European Patent Application No. 84305052.7, Publication 0133772A, now Patent 0133772B, we have described and claimed how a soluble or dissolved tea product may be obtained from a tea liquor using a water-soluble caseinate. The caseinate stabilises the liquor against tea cream formation and allows the liquor to be cooled to enable cold concentration processes to be employed.

We have now discovered that the caseinate technique can be employed even after creaming of the tea liquor has taken place. The liquor may be cooled, say, to room temperature — thus forming a heavy tea cream precipitate — and a water-soluble caseinate then added (in solid or liquid form). Dispersion of the caseinate in the creamed tea liquor causes the latter to stabilise. The tea cream disappears to leave a clear solution. The latter may then be cold concentrated by any of the processes described in European Patent Application 84305052.7.

According to the present invention we provide a method of producing a soluble or dissolved tea product, which comprises forming a tea liquor by extraction of leaf tea with water, and concentrating the liquor, characterised by allowing the liquor to adjust to a temperature at which tea cream forms, then adding a water-soluble caseinate to provide a solution which is substantially clear at room temperature, said caseinate being added in an amount constituting from 5 to 50% by weight of the liquor/caseinate mixture on a dry weight basis, the liquor/caseinate mixture having a pH of from 4.5 to 7.5, and concentrating the liquor/caseinate mixture to a liquor of higher solids content.

The invention is a modification of the method described in European Patent 0133772B and is characterised in that tea cream is allowed to form in the tea liquor before the water-soluble caseinate is added. Apart from this modification all the other processing described in European Patent 0133772B may be employed.

The following Example illustrates the invention.

### Example

706 g leaf tea (a blend of fannings and dust) was placed in a vessel of about 3 litres capacity, fitted with a warm water jacket. 4.5 litres of water at 90°C was pumped into the vessel, allowed to stand for 5 minutes and ejected by pumping in air at 6 psi. The 2.8 litres of tea extract so obtained was cooled in a heat exchanger to 10°C and then placed in a vessel with a bottom opening connected to a Lowara C70/5 Centrifugal Pump. (The tea creamed during the cooling stage and became a bright orange colour). The outlet to this pump was connected to an eductor made by KPX Eductors, 1 Park View, Binns Lane, Holmfirth, Huddersfield.

The pump was started and the eductor directed so as to recirculate the tea extract back into the vessel. Powdered sodium caseinate (120 g) was fed into the solution through the throat of the eductor over a period of about 10 minutes. The caseinate dissolved and the solution remained pale brown because of air-entrainment. Once the pump was switched off and the air separated out, the liquid was no longer bright orange. This showed that the creaming had been reversed even though the temperature had not risen above 20°C.

It was then possible to concentrate the stabilised extract by any low temperature process, such as described in European Patent Application No. 84305052.7.

## Claims

1. A method of producing a soluble or dissolved tea product, which comprises forming a tea liquor by extraction of leaf tea with water, and concentrating the liquor, characterised by allowing the liquor to adjust to a temperature at which tea cream forms, then adding a water-soluble caseinate to provide a solution which is substantially clear at room temperature, said caseinate being added in an amount constituting from 5 to 50% by weight of the liquor/caseinate mixture on a dry weight basis, the liquor/caseinate mixture having a pH of from 4.5 to 7.5, and concentrating the liquor/caseinate mixture to a liquor of higher solids content.

2. A method according to claim 1 wherein the caseinate is added to the tea liquor as a solution.

3. A method according to claim 1 wherein the caseinate is added to the tea liquor as a solid.

## Patentansprüche

1. Verfahren zum Herstellen eines Instant- oder aufgelösten Teeprodukts, bei dem eine Teeflüssigkeit durch Extraktion von Teeblättern mittels Wassers hergestellt und konzentriert wird, dadurch gekennzeichnet, daß es der Flüssigkeit erlaubt wird, eine Temperatur anzunehmen, bei welcher "tea cream" entsteht, daß daraufhin ein wasserlösliches Caseinat zugegeben wird, so daß eine Lösung entsteht, die bei Raumtemperatur im wesentlichen klar ist, wobei das Caseinat in einer Menge von 5 bis 50 Gew.% der Trockenmasse der Flüssigkeits-/Caseinat-Mischung zugegeben wird, wobei die Flüssigkeits-/Caseinat-Mischung einen pH-Wert von 4,5 bis 7,5 aufweist, und daß die Flüssigkeits-/Caseinat-Mischung konzentriert wird, so daß eine Flüssigkeit mit höherem Feststoffanteil entsteht.

2. Verfahren nach Anspruch 1, dadurch gekennzeichnet, daß das Caseinat der Teeflüssigkeit als Lösung zugegeben wird.

3. Verfahren nach Anspruch 1, dadurch gekennzeichnet, daß das Karseinat der Teeflüssigkeit in fester Form zugegeben wird.

**Revendications**

1. Un procédé pour produire un produit de thé soluble ou dissous, qui comprend la formation d'une liqueur de thé par extraction de thé en feuilles par de l'eau, et la concentration de la liqueur, caractérisé par le fait que l'on laisse la liqueur se placer à une température à laquelle se forme de la crème de thé, que l'on ajoute ensuite un caséinate soluble dans l'eau pour donner une solution qui est sensiblement limpide à température ambiante, ledit caséinate étant ajouté en quantité représentant de 5 à 50% en poids du mélange liqueur/caséinate, par rapport au poids de matières sèches, le mélange liqueur/caséinate ayant un pH allant de 4,5 à 7,5, et que l'on concentre le mélange liqueur/caséinate jusqu'à obtenir une liqueur ayant une teneur en solides plus élevée.

2. Un procédé selon la revendication 1 dans lequel le caséinate est ajouté à la liqueur de thé sous forme de solution.

3. Un procédé selon la revendication 1 dans lequel le caséinate est ajouté à la liqueur de thé à l'état solide.